# EUROPÄISCHE PATENTSCHRIFT

(11) **EP 1 099 882 B1**
(45) Veröffentlichungstag und Bekanntmachung des Hinweises auf die Patenterteilung: **31.03.2004**
(21) Anmeldenummer: 00124213.0
(22) Anmeldetag: 09.11.2000
(51) Int. Cl.: F16H 57/08

(54) **Planetengetriebe**
Planetary transmission
Transmission planétaire

(30) Priorität: 13.11.1999 DE 19954636
(43) Veröffentlichungstag der Anmeldung: 16.05.2001
(73) Patentinhaber: ZF FRIEDRICHSHAFEN Aktiengesellschaft, 88038 Friedrichshafen (DE)
(72) Erfinder: Baur, Erwin, 88046 Friedrichshafen (DE); Pohlenz, Jürgen, 88214 Ravensburg (DE); Konrad, Helmut, 88362 Aulendorf (DE)

(56) Entgegenhaltungen:
- DE-A- 2 442 588
- DE-A- 4 009 968
- DE-A- 19 730 004

## Beschreibung

Die Erfindung betrifft ein Planetengetriebe nach der im Oberbegriff von Anspruch 1 näher definierten Art. Planetengetriebe werden häufig als Reduktionsgetriebe oder Schaltgetriebe zum Schalten verschiedener Übersetzungen veriwendet, da je nach dem welches Glied des Planetengetriebes drehfest gehalten ist, den Antrieb oder den Abtrieb bildet, verschiedene Übersetzungen geschaltet werden können. Um bei sehr hohen Drehmomenten das Planetengetriebe mit großer Übersetzung ausführen zu können, wird das Planetenrad über eine Lagerung auf einem Planetenbolzen, welcher sich an jedem Ende im Planetenträger abstützt, gelagert. Der Planetenträger ist hierfür zweischnittig ausgeführt. Um die Axialkräfte der Planetenräder aufzunehmen, wird zwischen dem Planetenrad und dem Planetenträger eine Anlaufscheibe angeordnet, welche die Kräfte, welche z. B. durch eine Schrägverzahnung des Planetengetriebes entstehen, aufnimmt.

Die DE 40 09 968 A1, die als nächstliegender Stand der Technik angesehen wird, offenbart eine Planetenradträgeranordnung für ein Planetengetriebesystem bei welchem der Axialschub des Planetenrades von zwei harten, unnachgiebigen Anlaufscheiben aufgenommen und in den Planetenträger abgeführt wird. Indem das Planetenrad an harten, unnachgiebigen Anlaufscheiben anliegt, wird, wenn sich unter Drehmomentbelastung der Planetenträger verformt, das Planetenrad ebenfalls mit ausgelenkt. Bei Verwendung von Nadeln oder Rollen als Lagerung des Planetenrades kann es somit zu einer unzulässigen Verkleinerung der Lagerluft kommen, wodurch die Lebensdauer der Lagerung negativ beeinflußt wird. Durch die Lagerluft und Verzahnungsfehler kann das Planetenrad sich schief stellen und an einigen Stellen der Planetenradlagerung diese unzulässig verkleinern. Wird das Planetengetriebe mit Schwingungen angeregt, so übertragen sich diese Schwingungen über die harten Anlaufscheiben direkt auf das Planetenrad und in die Lagerung des Planetenrades, wodurch die Lebensdauer der Lagerung des Planetenrades negativ beeinflußt wird.

Aufgabe der vorliegenden Erfindung ist es, ein Planetengetriebe zu schaffen, bei welchem die Lagerung des Planetenrades nicht durch äußere Einflüsse negativ beeinflußt wird und somit die Lebensdauer der Lagerung nicht verringert wird.

Die Aufgabe wird mit einem, auch die kennzeichnenden Merkmale des Hauptanspruchs aufweisenden, gattungsgemäßen Planetengetriebe gelöst.

Erfindungsgemäß befindet sich auf mindestens einer Seite des Planetenrades eine Anlaufscheibe, welche im elastischen Bereich und/oder plastischen Bereich soweit verformbar ist, daß das Lager des Planetenrades gleichmäßig belastet wird, bzw. seine Lagerluft nicht unzulässig eingeschränkt wird und in das Planetengetriebe eingeleitete Schwingungen gedämpft werden. Da das Planetengetriebe vorzugsweise in einem Leistungsverzweigungsgetriebe mit einem mechanischen Leistungszweig und einem hydraulischen Leistungszweig eingesetzt wird, werden Schwingungen vor allem aus dem hydraulischen Leistungszweig direkt in das Planetengetriebe eingeleitet und regen das Planetenrad zu Schwingungen an. Besonders belastet ist die Planetenstufe, welche als Summierungsgetriebe verwendet wird, und direkt mit dem hydraulischen Leistungszweig in Verbindung steht, da bei dieser Planetenstufe die Schwingungen direkt auf die Planetenstufe wirken und sich alle Bauteile gleichzeitig drehen. Dies wird durch die Verwendung der elastisch verformbaren Anlaufscheiben verringert. Vorzugsweise wird das Planetengetriebe schrägverzahnt ausgeführt. Durch Verzahnungsfehler übt das Planetenrad eine Axialkraft auf die Anlaufscheibe aus, welche da sie im elastischen Bereich verformbar ist, somit die Schwingungen des Planetenrades dämpft. Durch Fertigungstoleranzen des Planetengetriebes kann das Planetenrad schief zur Anlaufscheibe und somit zum Planetenträger angeordnet sein. Die Anlaufscheibe läßt sich im zulässigen Bereich plastisch verformen oder abtragen, bis das Planetenrad wieder vollständig anliegt und somit die Lagerung des Planetenrades gleichmäßig belastet wird. Als Lagerung des Planetenrades wird vorzugsweise eine Nadel- oder Rollenlagerung verwendet, wobei die innere Lauffläche der Lagerung der Planetenbolzen ist und die äußere Lauffläche der Lagerung das Planetenrad darstellt. Der Planetenbolzen ist an jedem Ende in einem Planetenträger gehalten, wodurch ein Planetengetriebe entsteht, mit welchem sehr hohe Drehmomente übertragen werden können. Bei Anliegen eines hohen Drehmoments verformt sich der Planetenträger und somit verändert sich die Stellung des Planetenbolzen. Das Planetenrad kann, in dem die Anlaufscheibe aus einem elastischen Material besteht, dieser Verformung folgen oder wird plastisch im zulässigen Bereich verformt oder abgetragen, wodurch die Lagerung des Planetenrades gleichmäßig belastet, bzw. die Lagerluft nicht unzulässig eingeschränkt wird. Die Anlaufscheibe wird vorzugsweise aus einem Thermoplastwerkstoff ausgeführt, welcher unter anderem mit Graphit angereichert sein kann, um den Reibwert herabzusetzen. Vorzugsweise weist der Thermoplastwerkstoff entgegen den eigentlichen Eigenschaften eines Thermoplastwerkstoffes einen nahezu linearen Abfall der Festigkeit bei steigender Temparatur auf. Dies kann durch Zusätze wie z. B. Graphit erreicht werden.

Durch eine gezielte Schmierung, vorzugsweise über zwei getrennte Schmiermittelzuführungen wird die Dämpfung im Planetengetriebe zusätzlich verbessert.

Weitere Merkmale sind der Figurenbeschreibung zu entnehmen.
Es zeigen:
- Fig. 1: Ein Leistungsverzweigungsgetriebe mit einem hydraulischen und einem mechanischen Lei stungszweig.
- Fig. 2: Ein Planetengetriebe als Ausschnitt aus einem Leistungsverzweigungsgetriebe.
- Fig. 3: Einen Ausschnitt aus einem Planetengetriebe.

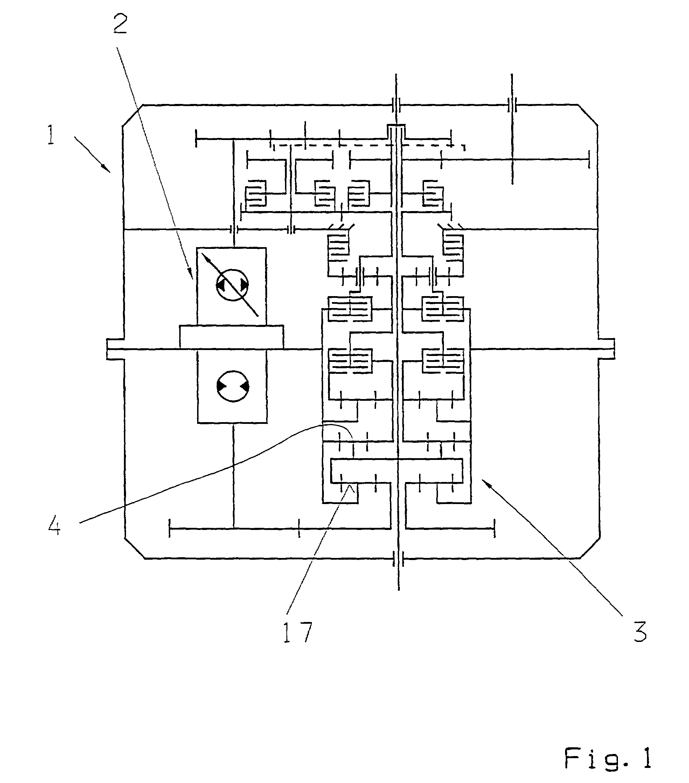

Fig. 1: In einem Leistungsverzweigungsgetriebe 1 ist ein hydraulischer Leistungszweig 2 und ein mechanischer Leistungszweig 3 angeordnet. Im mechanischen Leistungszweig 3 sind mehrere Planetengetriebe 4 angeordnet, welche vorzugsweise schrägverzahnt ausgeführt sind. Das Planetengetriebe 17 ist als Summierungsgetriebe ausgebildet und summiert den hydraulischen Leistungszweig 2 und den mechanischen Leistungszweig 3. In dem der hydraulische Leistungszweig 2 mit dem mechanischen Leistungszweig 3 verbunden ist, werden die Schwingungen des hydraulischen Leistungszweiges 2 direkt in den mechanischen Leistungszweig 3 und somit in die Planetengetriebe 17 und 4 übertragen.

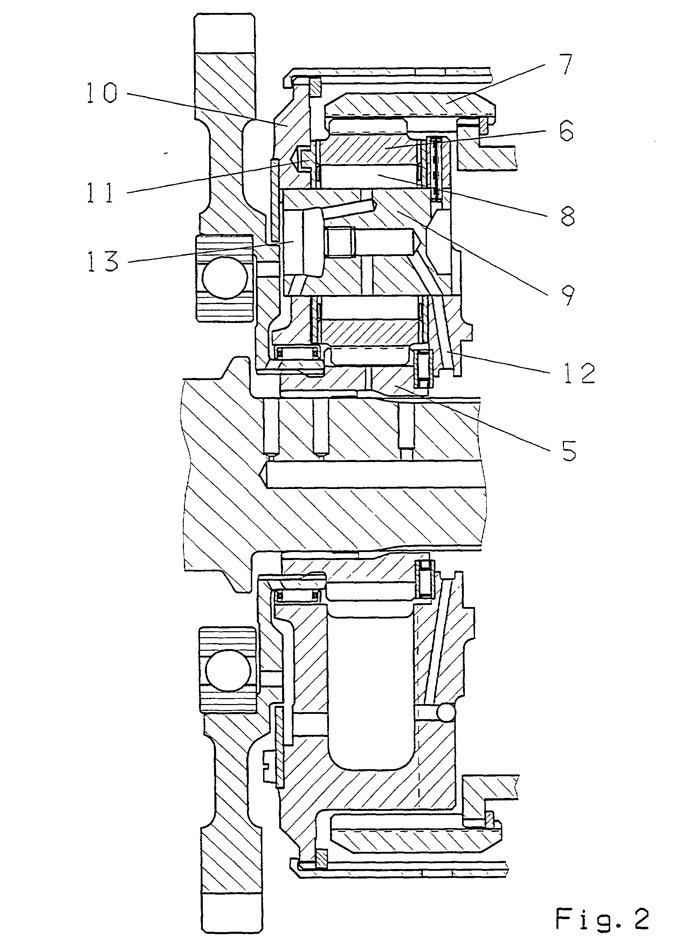

Fig. 2: Ein inneres Zentralrad 5 steht in kämmender Verbindung mit einem Planetenrad 6, welches in kämmender Verbindung mit einem Hohlrad 7 steht. Das Planetenrad 6 ist über eine Lagerung 8 auf einem Planetenbolzen 9 gelagert, welcher an jedem Ende in einem Planetenträger 10 gehalten ist. Zwischen dem Planetenrad 6 und dem Planetenträger 10 ist auf jeder Seite des Planetenrades 6 eine Anlaufscheibe 11 angeordnet. Die Anlaufscheibe 11 besteht aus einem elastisch und/oder plastisch verformbaren Material, um Verformungen des Planetenträgers auszugleichen und Schwingungen zu dämpfen. Indem zwei Schmierölzuführungen vorhanden sind und durch eine erste Schmierölzuführung 12 und eine zweite Schmierölzuführung 13 Schmieröl durch den Planetenbolzen 9 zur Lagerung 8 geleitet wird, wird die Lagerung 8 ausreichend mit Schmieröl versorgt. Dieses Schmieröl tritt zwischen der Anlaufscheibe und dem Planetenrad aus, dadurch wird eine zusätzliche Dämpfung des Planetenrades erreicht.

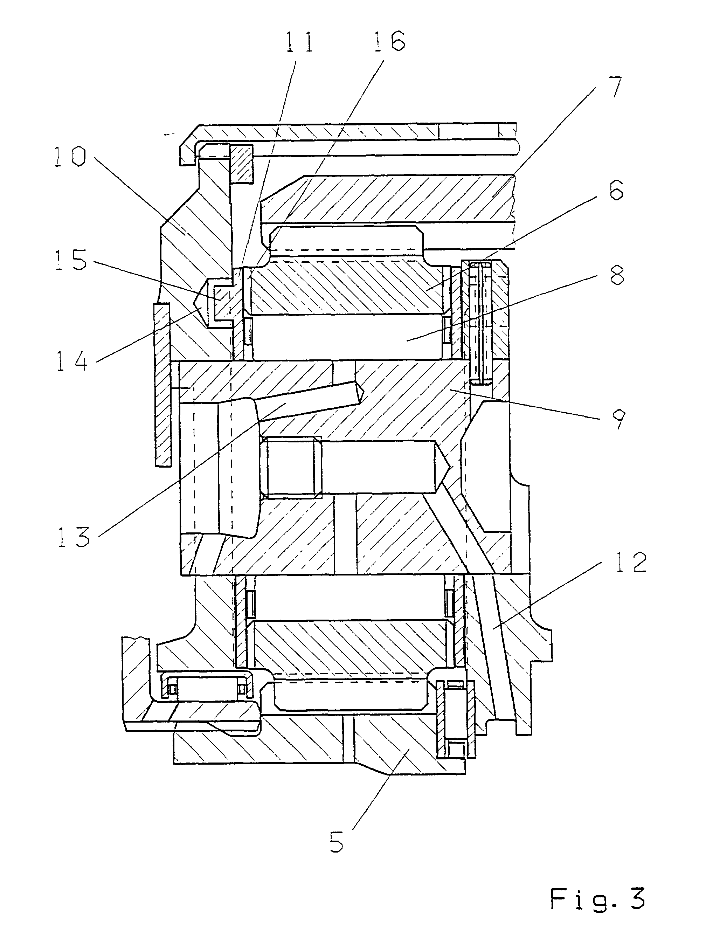

Fig 3: Ein Planetenrad 6 ist über eine Lagerung 8 auf einem Planetenbolzen 9 gelagert. Der Planetenbolzen 9 ist an jedem Ende in einem Planetenträger 10 gehalten. Im Planetenträger 10 ist eine Öffnung 14 vorhanden, in welche eine Lasche 15 der Anlaufsscheibe 11 drehfest mit dem Planetenträger 10 verbunden wird. Das Planetenrad 6 weist Öffnungen 16 auf, welche gewährleisten, daß ausreichend Schmiermittel zwischen der Anlaufscheibe 11 und dem Planetenrad 6 vorhanden ist. Indem die Anlaufscheibe 11 aus einem elastischen Material und/oder plastisch verformbaren Material besteht, und drehfest mit dem Planetenträger 10 verbunden ist, ist gewährleistet, daß Verformungen des Planetenträgers ausgeglichen werden und eventuell vorhandene Fremdpartikel sich in die Anlaufscheibe 11 einbetten, und somit gewährleistet ist, daß ein definierter Spalt zwischen der Anlaufscheibe 11 und dem Planetenrad 6 erhalten bleibt.

Indem sich die Anlaufscheibe 6 im elastischen Bereich verformen läßt, ist gewährleistet, daß die Lagerung des Planetenrades gleichmäßig belastet wird und Schwingungen, welche aus dem hydraulischen Leistungszweig 2 eines Leistungsverzweigungsgetriebes 1 in das Planetengetriebe 4 eingeleitet werden, gedämpft werden.

### Bezugszeichen

- 1.: Leistungsverzweigungsgetriebe
- 2.: Hydraulischer Leistungszweig
- 3.: Mechanischer Leistungszweig
- 4.: Planetengetriebe
- 5.: Inneres Zentralrad
- 6.: Planetenrad
- 7.: Hohlrad
- 8.: Lagerung
- 9.: Planetenbolzen
- 10.: Planetenträger
- 11.: Anlaufscheibe
- 12.: Erste Schmierölzuführung
- 13.: Zweite Schmierölzuführung
- 14.: Öffnung
- 15.: Lasche
- 16.: Öffnung
- 17.: Planetengetriebe

## Patentansprüche

1. Planetengetriebe bei welchem das innere Zentralrad (5) mit mindestens einem Planetenrad (6) und dieses mit einem Hohlrad (7) in kämmender Verbindung steht, wobei jedes Planetenrad (6) über eine Lagerung (8) auf einem Bolzen (9) gelagert ist, welcher sich an seinen beiden Enden in einem Planetenträger (10) abstützt, und bei welchem zwischen einem Planetenträger (10) und einem Planetenrad (6) auf mindestens einer Seite des Planetenrades (6) eine Anlaufscheibe (11) angeordnet ist, **dadurch gekennzeichnet, daß** die Anlaufscheibe (11) im elastischen Bereich soweit verformbar ist, daß die Lagerung (8) des Planetenrades (6) gleichmäßig belastet und Schwingungen gedämpft werden.

2. Planetengetriebe nach Anspruch 1, **dadurch gekennzeichnet, daß** das Planetengetriebe in einem Leistungsverzweigungsgetriebe (1) mit einem mechanischen Leistungszweig (3) und einem hydraulischen Leistungszweig (2) angeordnet ist.

3. Planetengetriebe nach Anspruch 1, **dadurch gekennzeichnet, daß** die äußere Lauffläche der Lagerung (8) des Planetenrades (6) das Planetenrad (6) ist, die innere Lauffläche der Planetenbolzen (9) ist und Wälzkörper der Lagerung (8) des Planetenrades (6) aus Nadeln oder Rollen bestehen.

4. Planetengetriebe nach Anspruch 1, **dadurch gekennzeichnet, daß** die Anlaufscheibe (11) im plastischen Bereich und im elastischen Bereich verformbar ist.

5. Planetengetriebe nach Anspruch 1, **dadurch gekennzeichnet, daß** das Planetengetriebe schrägverzahnt ausgeführt ist.

6. Planetengetriebe nach Anspruch 1, **dadurch gekennzeichnet, daß** die Anlaufscheibe (11) aus einem Thermoplastwerkstoff ausgeführt ist, welcher u. a. mit Graffit angereichert ist und einen nahezu linearen Abfall der Festigkeit bei steigender Temperatur aufweist.

7. Planetengetriebe nach Anspruch 1, **dadurch gekennzeichnet, daß** im Planetenbolzen (9) mindestens zwei Schmierölzuführungen (12, 13) vorhanden sind, welche die Lagerung (8) des Planetenrades (6) ausreichend mit Schmieröl versorgen.

## Claims

1. Planetary gear, in which the inner spider wheel (5) is in mesh with at least one planet wheel (6) and said planet wheel (6) is in mesh with a ring gear (7), wherein each planet wheel (6) is mounted via a bearing arrangement (8) on a pin (9), which is supported at its two ends in a planet carrier (10), and in which between a planet carrier (10) and a planet wheel (6) a buffer disc (11) is disposed at at least one side of the planet wheel (6), **characterized in that** the buffer disc (11) is deformable in the elastic region to such an extent that the bearing arrangement (8) of the planet wheel (6) is uniformly loaded and vibrations are damped.

2. Planetary gear according to claim 1, **characterized in that** the planetary gear is disposed in a power distribution transmission (1) having a mechanical power branch (3) and a hydraulic power branch (2).

3. Planetary gear according to claim 1, **characterized in that** the outer race of the bearing arrangement (8) of the planet wheel (6) is the planet wheel (6), the inner race is the planetary gear pin (9) and rolling bodies of the bearing arrangement (8) of the planet wheel (6) comprise needles or rollers.

4. Planetary gear according to claim 1, **characterized in that** the buffer disc (11) is deformable in the plastic region and in the elastic region.

5. Planetary gear according to claim 1, **characterized in that** the planetary gear is designed with helical gearing.

6. Planetary gear according to claim 1, **characterized in that** the buffer disc (11) is made of a thermoplastic material, which is enriched i.a. with graphite and presents an almost linear decline in strength with rising temperature.

7. Planetary gear according to claim 1, **characterized in that** provided in the planetary gear pin (9) are at least two lubricating oil feeds (12, 13), which provide the bearing arrangement (8) of the planet wheel (6) with an adequate supply of lubricating oil.

## Revendications

1. Transmission épicycloïdale dans laquelle la roue planétaire intérieure (5) est en liaison par engrènement avec au moins un pignon satellite (6) et ce dernier avec une couronne à denture intérieure (7), chaque pignon satellite (6) étant tourillonné par l'intermédiaire d'un palier (8) sur un axe (9) qui prend appui à ses deux extrémités dans un porte-satellites (10) et dans lequel un disque de démarrage (11) est disposé entre un porte-satellites (10) et un pignon satellite (6) sur au moins un côté du pignon satellite (6), **caractérisée en ce que** le disque de démarrage (11) peut se déformer dans son domaine élastique suffisamment pour que le palier (8) du pignon satellite (6) soit uniformément sollicité et que les vibrations soient amorties.

2. Transmission épicycloïdale selon la revendication 1, **caractérisée en ce que** la transmission épicycloïdale est agencée dans une transmission à ramification de la puissance (1) qui comprend une branche de puissance mécanique (3) et une branche de puissance hydraulique (2).

3. Transmission épicycloïdale selon la revendication 1, **caractérisée en ce que** la surface de roulement extérieure du palier (8) du pignon satellite (6) est le pignon satellite (6), la surface de roulement intérieure est l'axe de satellite (9) et les corps roulants du palier (8) du pignon satellite (6) sont constitués par des aiguilles ou des rouleaux.

4. Transmission épicycloïdale selon la revendication 1, **caractérisée en ce que** le disque de démarrage (11) peut se déformer dans le domaine plastique et dans le domaine élastique.

5. Transmission épicycloïdale selon la revendication 1, **caractérisée en ce que** la transmission épicycloïdale est à denture oblique.

6. Transmission épicycloïdale selon la revendication 1, **caractérisée en ce que** le disque de démarrage (11) est fait d'un matériau thermoplastique qui est enrichi de graphite, entre autres, et qui présente une décroissance de résistance mécanique presque linéaire avec l'accroissement de la température.

7. Transmission épicycloïdale selon la revendication 1, **caractérisée en ce que**, dans l'axe de satellite (9), sont prévues au moins deux amenées d'huile lubrifiante (12, 13) qui alimentent le palier (8) du pignon satellite (6) en huile lubrifiante en une quantité suffisante.
